# EUROPÄISCHE PATENTANMELDUNG

(11) **EP 2 582 209 A2**
(43) Veröffentlichungstag der Anmeldung: **17.04.2013**
(21) Anmeldenummer: 12006964.6
(22) Anmeldetag: 08.10.2012
(51) Int. Cl.: H05B 37/02

(54) **Bedienteil in einem elektrischen Istallationssystem sowie elektrisches Installationssystem, das mindestens ein Leistungsteil und mindestens ein Bedienteil umfasst**

(30) Priorität: 10.10.2011 DE 102011054357
(71) Anmelder: Gira Giersiepen GmbH & Co. Kg, 42477 Radevormwald (DE)
(72) Erfinder: Kemmann, Harald, Dipl.-Ing., 42555 Velbert (DE); Nawrocki, Matthias, 41470 Neuss (DE); Voigtländer, Andreas, 58509 Lüdenscheid (DE)
(74) Vertreter: Tönhardt, Marion

(57) **Zusammenfassung**

Ein Bedienteil in einem elektrischen Installationssystem, an das mehrere zu steuernde Lasten angeschlossen sind, mit einer Eingabeeinheit (120); einer Datenverarbeitungs- und Steuereinrichtung, welche Befehlssignale von der Eingabeeinheit (120) erhält und verarbeitet, um Steuersignale zu erzeugen, welche eine durch die Datensignale festgelegte Last steuern, einer Speichereinrichtung; einer Schnittstelle zum Kommunizieren mit einem Leistungsteil (530) in dem elektrischen Installationssystem, wobei die Schnittstelle eine Kontaktanordnung oder eine Funkschnittstelle ist, welche die Steuersignale aussendet, ist dadurch gekennzeichnet, dass in der Speichereinrichtung eine Datenbank angelegt ist, in der die zu steuernden Lasten in funktionale Gruppen eingeordnet sind, wobei jeder funktionalen Gruppe eine allen Mitgliedern der Gruppe gemeinsame Hauptfunktion zugeordnet ist, die Datenverarbeitungs- und Steuereinrichtung auf die Speichereinrichtung zugreift, um entsprechend dem Datensignal die zugehörige funktionale Gruppe zu ermitteln, und das Steuersignal mit der Information über die ermittelte funktionale Gruppe an die Schnittstelle zur Übertragung an das Leistungsteil ausgibt.

## Beschreibung

Die Erfindung betrifft ein Bedienteil in einem elektrischen Installationssystem, an das mehrere zu steuernde Lasten angeschlossen sind, mit einer Eingabeeinheit, einer Datenverarbeitungs- und Steuereinrichtung, welche Befehlssignale von der Eingabeeinheit erhält und verarbeitet, um Steuersignale zu erzeugen, welche eine durch die Datensignale festgelegte Last steuern, weiter mit einer Speichereinrichtung und einer Schnittstelle zum Kommunizieren mit einem Leistungsteil in dem elektrischen Installationssystem, wobei die Schnittstelle eine Kontaktanordnung oder eine Funkschnittstelle ist, welche die Steuersignale aussendet. Die Erfindung betrifft weiterhin ein elektrisches Installationssystem, das mindestens ein Leistungsteil und mindestens ein derartiges Bedienteil aufweist.

Im Bereich der elektrischen Installationstechnik befindet sich schon seit Langem neben den klassischen Lichtschaltern eine große Anzahl weiterer Steuergeräte am Markt, mit denen die Arten der zu steuernden Lasten sowie die Steuerungsmöglichkeiten erweitert werden. Ziel ist immer auch, die Art der Bedienung des Installationsgerätes zu erleichtern.

Als Lasten werden neben Glühlampen vielfältige Arten innovativer Leuchtmittel bzw. Vorschaltgeräten mit Leuchtmitteln sowie Rollladen und Jalousien, Motoren, Ventilatoren und dergleichen gesteuert. Dabei werden vor allem Phasenanschnittsteuerung, Phasenabschnittssteuerungen, 1-10 V-Schnittstellen und digitale Ansteuerschnittstellen verwendet. Mit Zeitschaltern und Zeitdimmern kann darüber hinaus die Einschaltzeitdauer und gegebenenfalls die Abschaltzeit beeinflusst werden. Bei motorbetriebenen Jalousie- und Rollladenantrieben werden zur Ansteuerung der zwei Motorwicklungen meist Relaiskontakte verwendet.

Zur Funktion eines elektrischen oder elektronischen Installationsgerätes sind im Wesentlichen ein Bedienteil und ein Leistungsteil zum Schalten oder Dimmen erforderlich. Schon früh kam der Gedanke auf, diese Funktionsgruppen zu trennen, um für ein gemeinsames Unterputz-Leistungsteil verschiedene Aufsätze anbieten zu können. Als weiterer Vorteil ergibt sich, dass man bei geeigneter Konstruktion die mechanischen Höhenunterschiede zwischen den bereits in Installationsdosen eingebauten Unterputzeinsätzen und den aufsteckbaren Bedienteilen ausgleichen kann. Umfassende Beispiele für Kombinationen aus verschiedenen Leistungsteilen und Bedienteilen sind in der DE 198 45 960 A1 aufgeführt.

Als Leistungsteile sind Relaisschalter zum Schalten von Beleuchtung oder Rollladen bzw. Jalousien im Einsatz, sowie Dimmer auf Basis von Triacs, MOSFETs oder IGBTs. Dabei fällt auf, dass bei bekannten Unterputz-Einsätzen Relaisschalter und Dimmer nicht gemeinsam in einem Leistungsteil verbaut sind. Diese Option scheitert am nicht ausreichend vorhandenen Platz in einer standardmäßigen Unterputzdose mit einer Bautiefe von 50 mm, die nicht genügend Raum für beide Komponenten bietet. Umfassende Funktionalität kann in einem Bedienteil hingegen besser dargestellt werden.

Die DE 93 21 350 U1 hat zum Ziel, ein Bedienteil dahingehend zu verbessern, dass mit einer möglichst geringen Anzahl unterschiedlicher Baueinheiten und damit entsprechend geringeren Anforderungen an Lagerhaltung und Beschaffung, ein breites Spektrum verschiedener Anwendungen abgedeckt werden kann. Bei dem Bedienteil ist eine eigene, vom Geräteunterteil getrennte Auswerteelektronik vorgesehen, welche wiederum mit einer Aufnahmestufe verbunden ist, die zur Erfassung der von einem Befehlsaufnahmeelement kommenden Steuersignale dient und die außerdem mit einer Schnittstellenlogik zur Ausgabe an Funktionsgruppen des Geräteunterteils in Verbindung steht. Damit hat das Bedienteil den Charakter einer weitgehend selbständigen Funktionseinheit erhalten. Als Auswerteelektronik dient im Allgemeinen ein Prozessor. Die Auswerteelektronik beinhaltet weiterhin eine Speicherlogik, in der bestimmte Schaltzustände abspeicherbar und bei Bedarf reaktivierbar sind.

Der Wettbewerb ersetzt zunehmend Geräte und Funktionen durch Software. Daher sollte es das Ziel sein, ein einziges Gerät mit vielen Funktionen zu ermöglichen. Mit anderen Worten besteht der Wunsch, ein universelles Bedienteil zu schaffen, das mit einem möglichst universellen Leistungsteil kombiniert werden kann, um die unterschiedlichsten Schaltaufgaben zu erfüllen. Das Bedienteil sollte daher individuell zu parametrisieren sein, das Leistungsteil so gestaltet, dass es zu jeder Verdrahtung passt.

Diese Aufgabe wird von einem Bedienteil in einem elektrischen Installationssystem nach Anspruch 1 gelöst. Die Aufgabe wird weiterhin gelöst durch ein elektrisches Installationssystem, das mindestens ein Leistungsteil und mindestens ein erfindungsgemäßes Bedienteil umfasst, wobei jedes Leistungsteil gemäß Anspruch 10 gestaltet ist. Vorteilhafte Ausgestaltungen der Erfindung sind Gegenstand der jeweils rückbezogenen Unteransprüche.

Das erfindungsgemäße Bedienteil ist dadurch gekennzeichnet, dass in der Speichereinrichtung eine Datenbank angelegt ist, in der die zu steuernden Lasten in funktionale Gruppen eingeordnet sind, wobei jeder funktionalen Gruppe eine allen Mitgliedern der Gruppe gemeinsame Hauptfunktion zugeordnet ist, die Datenverarbeitungs- und Steuereinrichtung auf die Speichereinrichtung zugreift, um entsprechend dem Datensignal die zugehörige funktionale Gruppe zu ermitteln, und das Steuersignal mit der Information über die ermittelte funktionale Gruppe an die Schnittstelle zur Übertragung an das Leistungsteil ausgibt. Damit ist das Bedienteil in der Lage, dem Leistungsteil grundsätzlich mitzuteilen, welche Funktion es ausüben soll, ob es beispielsweise eine Lichtsteuerung, eine Jalousiesteuerung oder eine Temperatursteuerung realisieren soll. Ob das Leistungsteil zu der gewünschten Steuerung überhaupt in der Lage ist, hängt davon ab, welche Funktionalität in ihm untergebracht ist. Ihr volles Leistungsspektrum entwickelt das "universelle Bedienteil" dann im Zusammenhang mit dem "universellen Leistungsteil", das noch beschrieben wird. Es ist aber auch mit herkömmlichen Leistungsteilen verwendbar, solange diese die Steuersignale des Bedienteils interpretieren können.

Vorteilhaft ist vorgesehen, dass als Eingabeeinheit ein Touch-Sensor mit einer horizontalen und einer vertikalen Abmessung vorgesehen ist und dass ein Display hinter dem Touch-Sensor angeordnet ist, welches zumindest die zu steuernde Last und wenigstens einen Steuerparameter der zu steuernden Last anzeigt. Damit kann das erfindungsgemäße Konzept von einem Benutzer intuitiv umgesetzt werden.

Nach einer vorteilhaften Ausgestaltung ist der Touch-Sensor auf einer einseitig aufgehängten mechanischen Wippe montiert. Dies entspricht dem Prinzip eines herkömmlichen Lichtschalters, so dass eine intuitive Bedienung des Touch-Sensors vorgegeben werden kann.

Bevorzugt ist daher die Hauptfunktion einer funktionalen Gruppe durch Drücken eines vertikal unteren Bereiches der Wippe oder Tippen auf einen vertikal unteren Bereich des Touch-Sensors auszulösen.

Vorzugsweise bewirkt die Datenverarbeitungs- und Steuereinrichtung bei dem erfindungsgemäßen Bedienteil, dass die Navigation zwischen Mitgliedern einer funktionalen Gruppe durch Wischen des Touch-Sensors in einer ersten Richtung erfolgt und dass die Navigation zwischen funktionalen Gruppen durch Wischen des Touch-Sensors in einer zweiten Richtung, die von der ersten Richtung unterschiedlich ist, erfolgt. Die erste Richtung kann dabei entlang der horizontalen Abmessung des Touch-Sensors definiert sein, die zweite Richtung entlang der vertikalen Abmessung oder umgekehrt.

Weiter vorzugsweise ist jeder funktionalen Gruppe eine Nebenfunktion zugeordnet, wobei die unterschiedlichen Nebenfunktionen durch dieselbe haptische Bewegung auf dem Touch-Sensor auszulösen sind. Dies kann das zeichnen eines Kreises oder einer anderen Figur mit einem Finger sein.

Nach einer bevorzugten Ausführungsform weist das Bedienteil einen Näherungssensor auf. Die Annäherung einer Person sollte aus einer Entfernung von 50 cm bis 70 cm erkannt und damit das System aus dem Stand-by geweckt werden. Bei Dunkelheit braucht der Näherungssensor nicht zu funktionieren. Als Alternative kann eine Anwesenheitserkennung durch Mikrofon vorgesehen sein, wobei die Anwesenheitsdetektion durch Geräusche im Raum erfolgt. Entsprechende geeignete Mikrofone mit hoher adaptiver Empfindlichkeit sind verfügbar. An eine Spracherkennung oder Sprachsteuerung ist dabei vorrangig allerdings nicht gedacht. Vom Energiemanagement her sollte das Mikrofon nur bei Netz- oder Busversorgung aktivierbar sein.

Das Bedienteil kann außerdem einen Lagesensor aufweisen, um einen Diebstahl zu melden oder Alarm auszulösen, wenn das Bedienteil vom Leistungsteil abgezogen wird. Als Alternative zum Lagesensor kommt gegebenenfalls ein Erschütterungssensor in Betracht, wenn es die bauliche Situation erlaubt.

Ein elektrisches Installationssystem, das mindestens ein Leistungsteil und mindestens ein Bedienteil gemäß der vorliegenden Erfindung umfasst, verwendet Leistungsteile, die wenigstens eine erste Treiber- und Endstufe mit Ausgang für den Anschluss einer ersten Last, eine zweite Treiber- und Endstufe mit Ausgang für den Anschluss einer zweiten Last und eine Schaltstufe aufweist, wobei das Leistungsteil weiter eine erste Steuereinrichtung, um nach Wahl eine der Treiber- und Endstufen oder/oder die Schaltstufe zu aktivieren, und eine erste Funkeinrichtung zur drahtlosen Kommunikation mit zur Zeit einem der Bedienteile aufweist.

Mit einer derartigen Ausgestaltung gemäß der vorliegenden Erfindung kann nun das Bedienteil dem Leistungsteil mitteilen, welche Funktion es ausüben soll. Umgekehrt würde auch das Leistungsteil dem Bedienteil mitteilen, welche Funktion es gerade ausübt. Damit stellt die Erfindung das Konzept eines universellen Bedienteils und eines universellen Leistungsteils zur Verfügung, wobei das Bedienteil gemäß den Wünschen des Benutzers individuell konfigurierbar ist und je nach Konfiguration einem oder mehreren Leistungsteilen die Steuerungsaufgabe aufgibt.

Im Folgenden soll die Erfindung anhand der beigefügten Zeichnung näher erläutert werden. Es zeigt:
- Figur 1: eine perspektivische Ansicht einer Ausführungsform eines Bedienteils gemäß der vorliegenden Erfindung;
- Figur 2: eine Seitenansicht des Bedienteils aus Figur 1;
- Figur 3: eine schematische Darstellung der hierarchischen Anordnung von funktionalen Gruppen zur Steuerung von Lasten;
- Figur 4: eine Veranschaulichung des Umschaltens zwischen den funktionalen Gruppen;
- Figur 5: eine schematische Darstellung des Schaltens zwischen Mitgliedern einer ersten funktionalen Gruppe;
- Figur 6: eine Darstellung von Mitgliedern einer zweiten funktionalen Gruppe;
- Figur 7: eine Darstellung von Mitgliedern einer dritten funktionalen Gruppe;
- Figur 8: eine Darstellung der Gruppe "Information";
- Figur 9: eine Darstellung einer vom Benutzer zu erzeugenden Gruppe "Favoriten" aus Mitgliedern funktionaler Gruppen;
- Figur 10: ein Beispiel für eine individuelle Parametrisierung für die Steuerung einer Last;
- Figur 11: ein Beispiel für die Gestaltung der Anzeigefläche des Displays eines erfindungsgemäßen Bedienteils;
- Figur 12: eine Darstellung zur Steuerung von Zusatzfunktionen;
- Figur 13: ein Blockschaubild der Funktionen eines Bedienteils gemäß der vorliegenden Erfindung;
- Figur 14: eine Explosionsdarstellung von Komponenten eines Bedienteils gemäß einer ersten Ausführungsform der vorliegenden Erfindung;
- Figuren 15a und 15b: Außenansichten des Bedienteils gemäß der vorliegenden Erfindung;
- Figur 16: eine Explosionsdarstellung, die das Zusammenwirken des Bedienteils gemäß der vorliegenden Erfindung mit einem Leistungsteil veranschaulicht;
- Figur 17: ein erstes Beispiel für einen Aufbau eines Bedienteils gemäß der vorliegenden Erfindung in einer Schnittansicht;
- Figur 18: ein zweites Beispiel für den Aufbau eines Bedienteils gemäß der vorliegenden Erfindung in einer Schnittansicht;
- Figur 19: eine Draufsicht auf eine Tragplatte für ein Leistungsteil zur Verwendung bei der vorliegenden Erfindung;
- Figur 20: eine Seitenansicht eines Leistungsteiles zur Verwendung bei der vorliegenden Erfindung;
- Figur 21: eine Draufsicht auf die Vorderseite einer Platine für ein Leistungsteil;
- Figur 22: eine Draufsicht auf die Rückseite einer Platine für ein Leistungsteil; und
- Figur 23: eine Draufsicht auf ein Funkmodul zur Verwendung bei einem Leistungsteil.

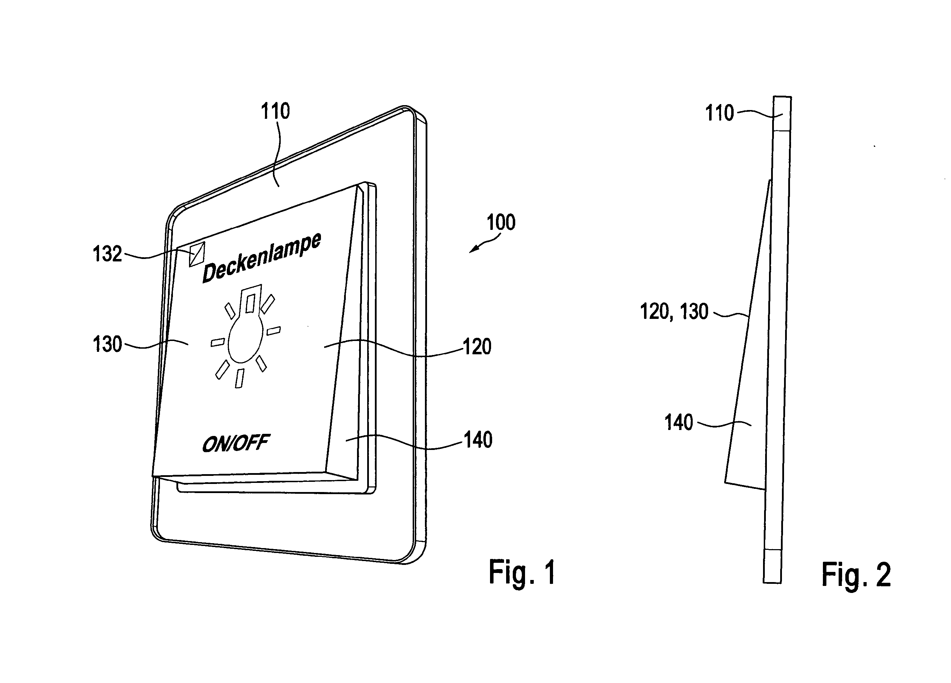

Figur 1 zeigt eine perspektivische Ansicht einer Ausführungsform eines Bedienteils gemäß der vorliegenden Erfindung. Das Bedienteil 100 umfasst einen Rahmen 110, in dem ein Touch-Sensor 120 in einem Gehäuse 140 auf einer einseitig aufgehängten mechanischen Wippe (nicht dargestellt) montiert ist. Der Touch-Sensor 120 ist vorzugsweise eine kapazitive, zweidimensionale Fläche innerhalb der aktiven Fläche eines Displays 130. Bei Bedienung an der Wand ermöglicht die Wippe ein eindeutiges, vom Benutzer gelerntes haptisches Feedback. Durch die Schrägstellung des Gehäuses mittels der Wippe wird zudem die Lesbarkeit des hinter dem Touch-Sensor 120 befindlichen Displays 130 verbessert, da ein großer Ablesewinkel erreicht wird. Das Display 130 ist vorzugsweise ein monochromes Display. Farbige Status-Darstellungen beispielsweise durch LEDs 132 am Rand des Displays 130 sind gegebenenfalls möglich.

Figur 2 zeigt eine Ansicht des Bedienteils 100 aus Figur 1 von der Seite. Die Bautiefe des Gehäuses 110 soll 11 mm nicht überschreiten.

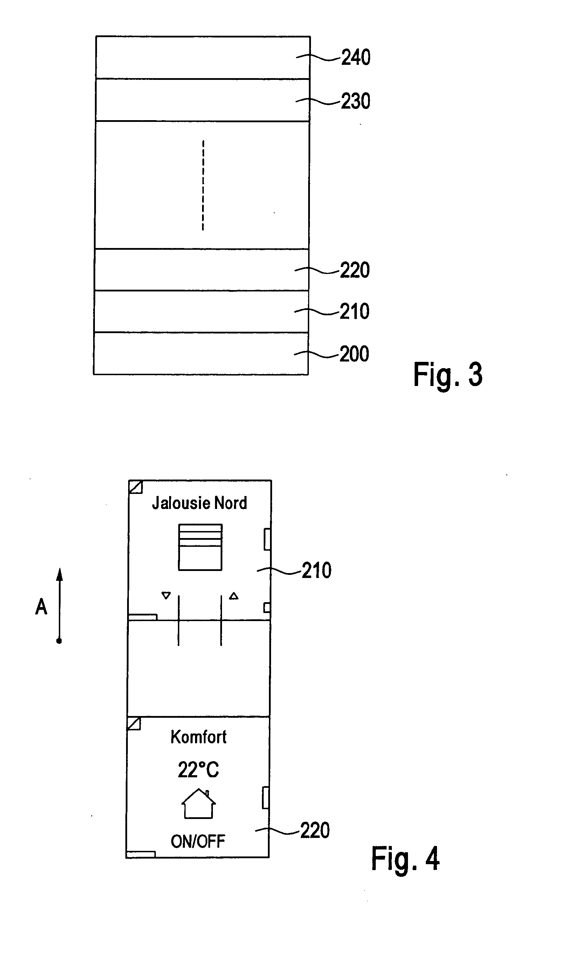

Im Folgenden soll zunächst die Funktionalität des Bedienteils 100 beschrieben werden. Das Bedienteil 100 enthält eine Datenverarbeitungs- und Steuereinrichtung, welche Befehlssignale von dem Touch-Sensor 120 erhält und verarbeitet, um Steuersignale zu erzeugen, welche eine durch die Datensignale festgelegte Last steuern. Weiterhin ist eine Speichereinrichtung vorhanden, in der eine Datenbank angelegt ist, in der die zu steuernden Lasten in funktionale Gruppen eingeordnet sind. Funktionale Gruppen sind z. B. "Beleuchtung", "Jalousiensteuerung", "Temperatursteuerung", deren Struktur im Folgenden noch erläutert wird. Der Aufbau der Datenbank in Bezug auf die funktionalen Gruppen und weitere Gruppen ist in Figur 3 schematisch veranschaulicht. Neben den schon genannten funktionalen Gruppen "Beleuchtung" 200, "Jalousiesteuerung" 210 und "Temperatursteuerung" 220 können weitere Gruppen vorhanden sein, beispielsweise "Information" 230 oder eine benutzerdefinierte Gruppe "Favoriten" 240. Die Struktur der Datenbank muss nicht notwendigerweise hierarchisch sein, wie es die Figur 3 vermitteln will. Die Darstellung soll lediglich den intuitiven Vorgang der Befehlseingabe nachbilden.

Jede funktionale Gruppe hat eine Hauptfunktion, z. B. Licht an für die funktionale Gruppe "Beleuchtung" 200, die durch Drücken auf den unteren Bereich des z. B. an einer Wand befindlichen Touch-Sensors 120 bzw. der Wippe 140 ausgelöst wird. Wird das Bedienteil 100 als Fernbedienung genutzt, wobei also die Wippenfunktion nicht zur Verfügung steht, wird die Hauptfunktion durch Tippen auf den unteren Bereich des Touch-Sensors 120 ausgelöst.

Die Raumrichtungen "oben", "unten", "links" und "rechts" beziehen sich auf Richtungen in Bezug auf einen Benutzer, der vor dem Bedienteil 100 steht oder es in der Hand hält.

Soll nun von einer funktionalen Gruppe in eine andere gewechselt werden, so wird auf dem Touch-Sensor 120 in vertikaler Richtung gewischt, je nach Lage der gesuchten funktionalen Gruppe von unten nach oben oder von oben nach unten. Figur 4 zeigt ein Beispiel, wobei durch Wischen in Richtung des Pfeiles A von der funktionalen Gruppe "Jalousiesteuerung" 210 in die funktionale Gruppe "Temperatursteuerung" 220 gewechselt wird. Von beiden funktionalen Gruppen ist jeweils ein Mitglied dargestellt.

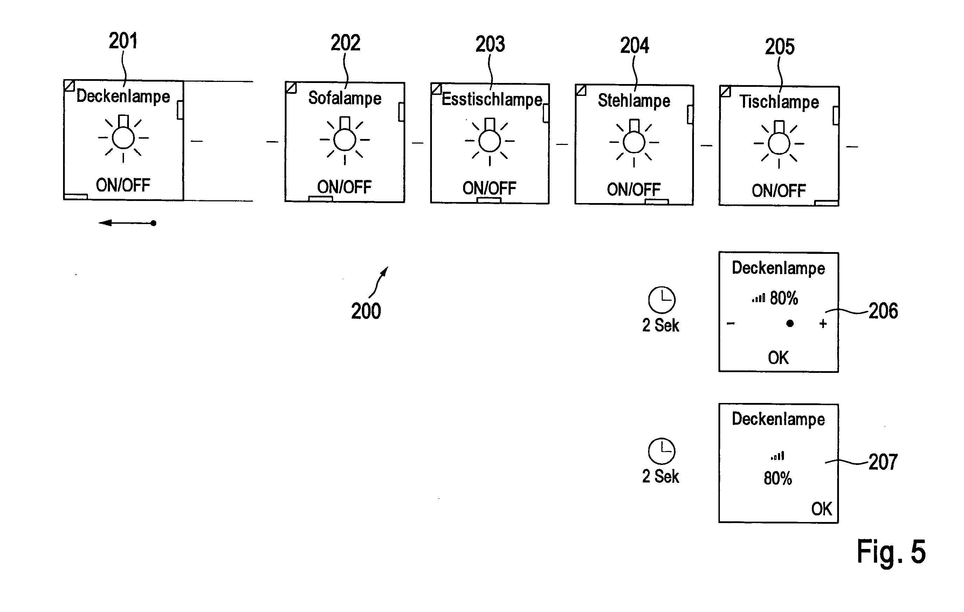

Jede funktionale Gruppe umfasst im Allgemeinen mehrere Mitglieder. Wie in Figur 5 dargestellt, umfasst die funktionale Gruppe "Beleuchtung" 200 beispielsweise fünf Mitglieder, nämlich Deckenlampe 201, Sofalampe 202, Esstischlampe 203, Stehlampe 204 und Tischlampe 205. Zwischen den Mitgliedern einer funktionalen Gruppe wird durch Wischen auf dem Touch-Sensor 120 in horizontaler Richtung, also von links nach rechts oder von rechts nach links, gewechselt. Jedem Mitglied einer funktionalen Gruppe kann eine Nebenfunktion zugeordnet sein, beispielsweise eine Dimmfunktion. Um diese einzustellen oder zu ändern, wird auf den Touch-Sensor 120 kurzzeitig, beispielsweise 2 Sekunden lang, gedrückt, woraufhin sich ein Dialogfenster öffnet. Die gewählte Lichtquelle, hier die Deckenlampe 201, kann dann abgestuft, wie bei 206 dargestellt, oder stufenlos, wie bei 207 dargestellt, gedimmt werden. Das stufenlose Dimmen erfolgt dabei durch eine Kreisbewegung des Fingers auf dem Touch-Sensor 120. Die getroffene Auswahl für die Nebenfunktion wird durch Drücken oder Tippen auf den unteren Bereich des Touch-Sensors 120 bestätigt.

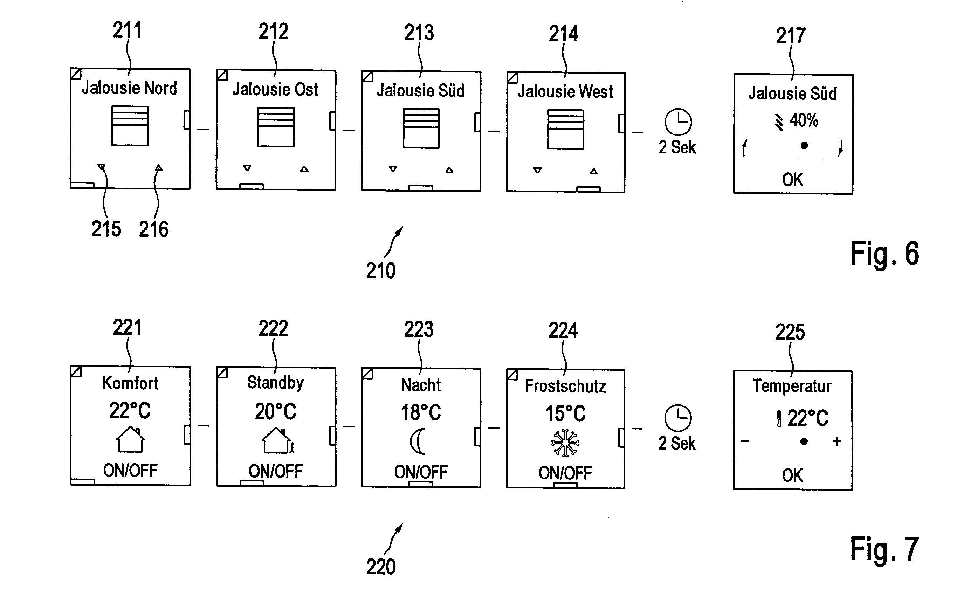

Figur 6 veranschaulicht die Bedienung von Jalousien. Zunächst navigiert der Benutzer durch Wischen auf dem Touch-Sensor 120 nach oben oder unten zur funktionalen Gruppe "Jalousiesteuerung" 210. Durch Drücken des Touch-Sensors 120 wird die gewählte Jalousie geschlossen oder geöffnet. Die Bewegungsrichtung der Jalousie ist aber abhängig von dem Bereich 215, 216 (hier am Beispiel der Jalousie Nord 211), auf dem der Benutzer seinen Finger aufgelegt hat. Erneutes Durchdrücken des Touch-Sensors 120 stoppt die Bewegung. Das kurzzeitige Berühren des Touch-Sensors 120 öffnet wiederum einen Dialog zum Einstellen des Winkels der Lamellen, wie bei 217 dargestellt. Die Einstellung der Lamellen erfolgt konsistent mit dem Dimmen von Lampen, also entweder abgestuft, wie bei 217 gezeigt, oder kontinuierlich durch eine Kreisbewegung des Fingers des Benutzers auf dem Touch-Sensor 120. Damit ist für den Benutzer für eine intuitiv zu erfassende Funktionalität gesorgt. Er muss nicht für jede zu steuernde Last ein neues Verhalten lernen.

Figur 7 zeigt ein Beispiel für die funktionale Gruppe "Temperatursteuerung" 220. Um die Heizung bzw. die Temperatur eines Raumes zu steuern, hat der Benutzer die Auswahl zwischen den Mitgliedern Komfort 221, Standby 222, Nacht 223 und Frostschutz 224. Das Betätigen des Touch-Sensors 120 aktiviert das aktuelle Mitglied und deaktiviert das zuvor gewählte Mitglied. Die Solltemperatur des jeweiligen Mitgliedes wird durch kurzzeitiges Berühren des Touch-Sensors 120 zum Öffnen des Dialogfensters und anschließendes Tippen bzw. kreisförmiges Bewegen des Fingers entsprechend den Dialogen der anderen funktionalen Gruppen eingestellt.

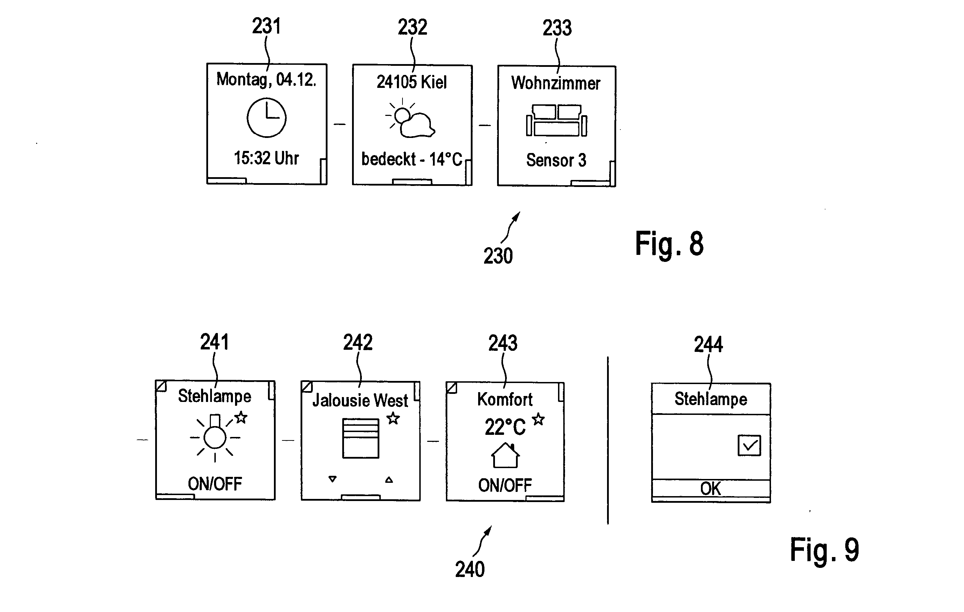

Figur 8 zeigt ein Beispiel einer Darstellung der Gruppe "Information" 230. Innerhalb dieser Gruppe wird Information wie aktuelle Tagesdaten, Wetterprognose und Raumname dargestellt. Die Tagesdaten 231 umfassen beispielsweise Wochentag, Datum und Uhrzeit, für die Wetterprognose 232 kann im noch zu beschreibenden Editiermodus die entsprechende Postleitzahl eingegeben werden.

Es versteht sich, dass die Organisation der Datenbank nicht auf die funktionalen Gruppen oder die weiteren Gruppe beschränkt ist, die in dem Zusammenhang mit den Figuren 5 bis 8 beschrieben sind. Auch kann zu jeder funktionalen Gruppe ein Mitglied oder können mehrere Mitglieder hinzugefügt werden. Beispielsweise ist eine weitere funktionale Gruppe "Musiksteuerung" denkbar, die Internetradio oder das Bedienen von Abspielgeräten in verschiedenen Räumen umfasst.

Der Benutzer kann häufig genutzte Geräte in einer Gruppe "Favoriten" 240, wie in Figur 9 dargestellt, zusammenfassen, die also Mitglieder unterschiedlicher funktionaler Gruppen und damit unterschiedliche Hauptfunktionen für diese aufweisen kann. Die Zusammenfassung geschieht im noch zu beschreibenden Editier-Modus, indem an einer geeigneten Stelle im Dialog vom Benutzer ein Häkchen gesetzt wird, wie es bei 244 dargestellt ist. Die Gruppe "Favoriten" 240 umfasst hier eine Stehlampe 241, die Jalousie West 242 und die Temperatur Komfort 243.

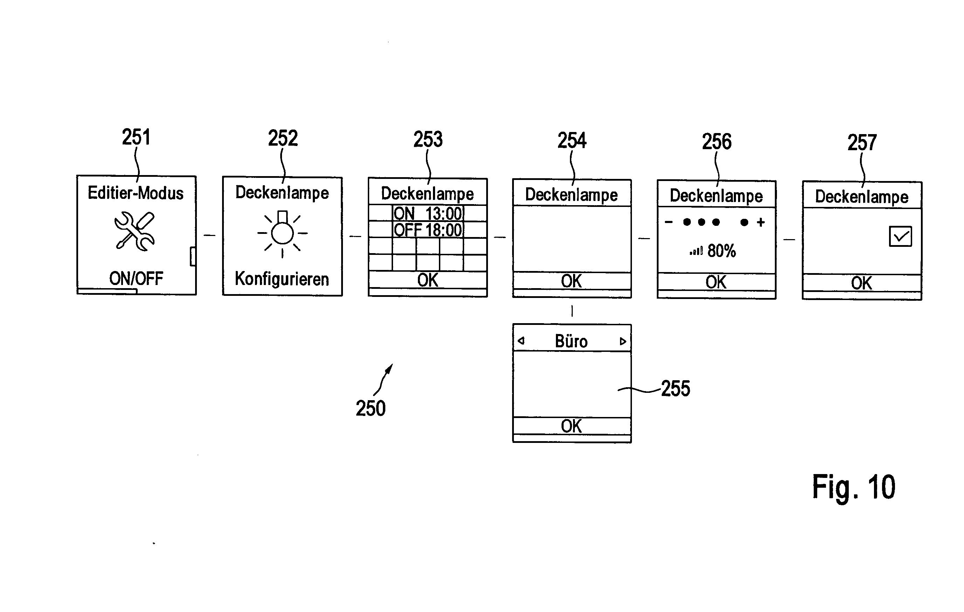

Figur 10 veranschaulicht, wie im Editier-Modus ein Gerät individuell konfiguriert werden kann. Ohne selbst eine funktionale Gruppe zu sein, kann der Editier-Modus Bestandteil der Konfiguration sein, die in den Figuren 3 und 4 veranschaulicht ist, d. h. der Benutzer gelangt durch Wischen in vertikaler Richtung, also von oben nach unten oder unten nach oben zu einer Anzeige "Editier-Modus" auf dem Display 130. Durch Drücken des Touch-Sensors 120 wird der Editier-Modus aktiviert. Dabei invertiert sich die Anzeige, um dem Benutzer eindeutig Rückmeldung zu geben, dass er sich nun in einem übergeordneten Modus befindet. Der Benutzer wählt nun ein zu konfigurierendes Gerät aus, beispielsweise eine Deckenlampe 252. Die Zeitschaltung 253 für die Deckenlampe erfolgt über die Eingabe der Ein- bzw. Ausschaltzeit und der Auswahl des Wochentags, einer Zufallsfunktion oder einer Astrofunktion, durch die Schaltzeiten täglich der sich jahreszeitlich verändernden Tageslänge angepasst werden. Bei der Beschriftung 254 werden Bezeichnungen, Raumnamen und dergleichen interaktiv über den Touch-Sensor 120 eingegeben. Schließlich erfolgt die Vorgabe für die Nebenfunktion 256 und die Auswahl als Favorit 257. Nach Abschluss der Konfiguration wird der Editier-Modus 251 deaktiviert.

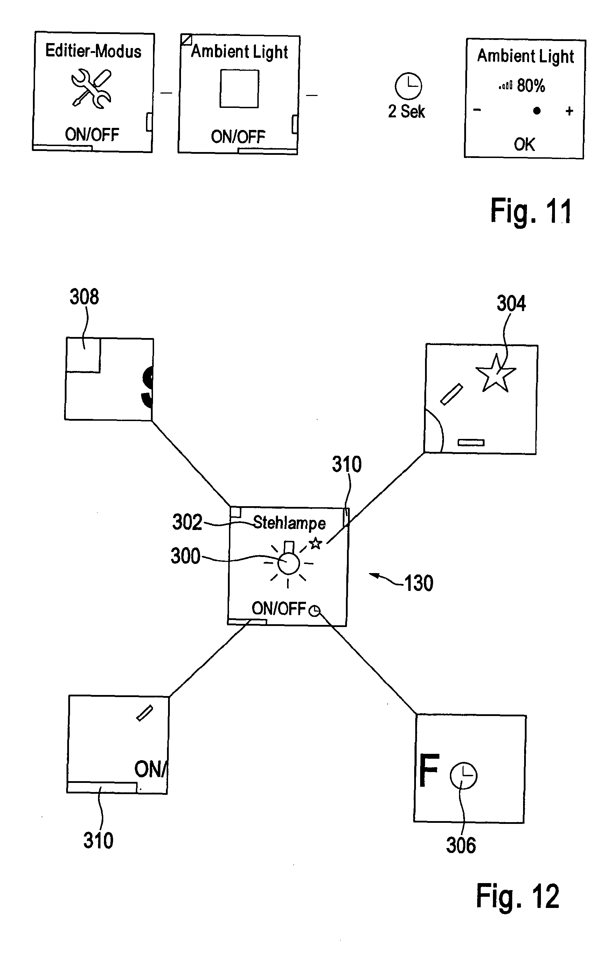

Der Editier-Modus umfasst, wie in Figur 11 veranschaulicht, einen Setup-Bereich, in dem Funktionen, die das Bedienteil 100 als Gerät selbst behandeln, gruppiert sind. Beispielsweise kann eine etwa vorhandenes Ambientbeleuchtung des Bedienteils 100 ein- oder ausgeschaltet und gedimmt werden.

Die Anzeige auf dem Display 130 gibt eine Vielfalt von Information über das zu steuernde Gerät. Schematisch ist dies in Figur 12 dargestellt. Ein großes, zentral angeordnetes Ikon 300 sorgt für das schnelle Erkennen der gewählten funktionalen Gruppe. Oberhalb des Ikons befindet sich die Beschriftung 302 des Gerätes, beispielsweise "Stehlampe". Ein Stern 304 dient als Kennzeichen, dass das Gerät als Favorit angelegt ist. Eine weitere Kennzeichnung 306 gibt an, dass für das Gerät eine Zeitschaltung aktiviert ist. Auch ist eine Angabe 308 vorhanden, dass ein Dialog zum Einstellen der Nebenfunktion, beispielsweise der Lichtintensität über einen Dimmer, zur Verfügung steht. Felder 310 am Rand des Displays 130 zeigen, an welcher Stelle sich der Benutzer innerhalb einer funktionalen Gruppe befindet. Die Orientierung im Hauptmenü wird durch Felder 310 am rechten Rand des Displays 130 unterstützt. Je nach Anzahl der Geräte skaliert sich das Feld. Damit ist eine Orientierungshilfe über die Position innerhalb einer Gruppe bzw. innerhalb der Hierarchie der funktionalen Gruppen gegeben, verbunden mit einer Angabe, wie viele Einträge noch folgen. Die Darstellungen sind lediglich beispielhaft und können abgeändert sein, wenn dies erforderlich ist oder gewünscht wird.

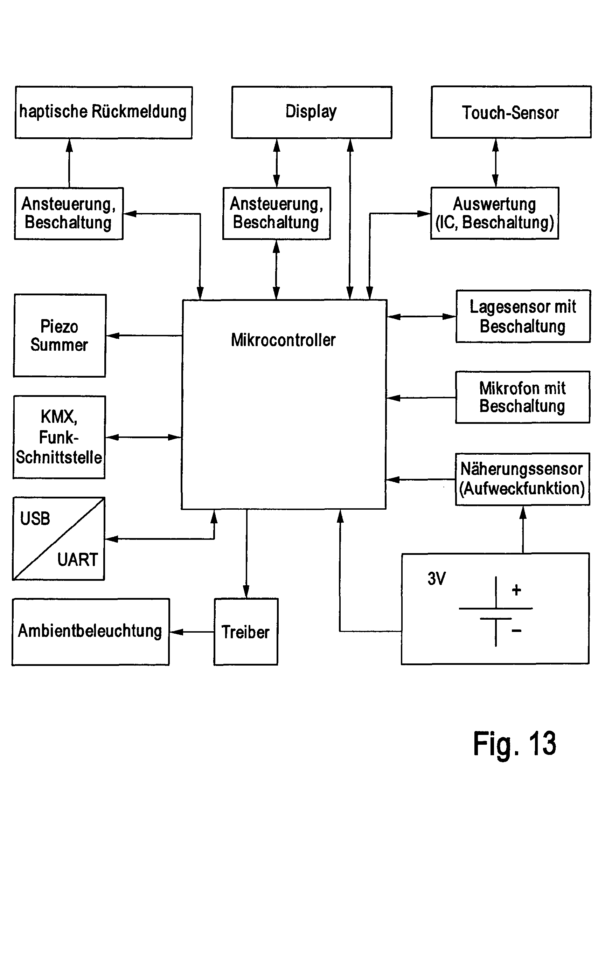

Figur 13 zeigt ein Blockschaubild der Funktionen eines Bedienteils gemäß der vorliegenden Erfindung. Die Datenverarbeitungs- und Steuereinrichtung ist als Mikrocontroller ausgebildet, der auch eine Speichereinrichtung umfasst, in der die Datenbank zur Steuerung einer Vielzahl von Lasten nach Wunsch eines Benutzers abgelegt ist. Als Energieversorgung dient eine Batterie, die eine Gleichspannung von 3 V liefert, so dass das Bedienteil über einen langen Zeitraum autark arbeiten kann. Dazu wird der Mikrocontroller ebenso wie alle anderen Strom verbrauchenden Komponenten des Bedienteils in einen Schlafmodus gebracht. Aufgeweckt wird der Mikrocontroller durch den Näherungssensor. In diesem Standby-Modus verbraucht das Bedienteil der vorliegenden Erfindung maximal 0.2 W, das bedeutet, dass bei batteriebetriebenen Produkten bei angenommenen zehn Betätigungen pro Tag mindestens drei Jahre ohne Batteriewechsel gearbeitet werden kann. Ein Empfang von Funktelegrammen ist dabei nur innerhalb der aktiven Zeit des Mikrocontrollers möglich. Die Anwesenheitserkennung erfolgt durch ein Mikrofon mit entsprechender Beschaltung, das Geräusche im Raum detektiert. Mikrofone mit hoher adaptiver Empfindlichkeit üben ihre Funktion auch bei Energieversorgung durch Batterie aus. Es kann aber daran gedacht werden, das Mikrofon nur bei Netz- oder Busversorgung zu aktivieren.

Ein Lagesensor mit entsprechender Beschaltung wechselwirkt mit dem Mikrocontroller. In Verbindung mit Funk und Batterie können Telegramme gesendet werden. Die Funktion des Lagesensors wird durch das Umschalten der Applikation dargestellt, ebenso wie durch eine Diebstahlsmeldung bei Abzug des Gerätes und anschließender Neigung, zumindest ab einem Neigungswinkel von etwa 25° gegenüber der vertikalen Wandposition.

Für die Ausübung der Funktionalität von Touch-Sensor und Display, wie zuvor beschrieben, sind diese entsprechend mit dem Mikrocontroller verschaltet. Dabei kann eine haptische Rückmeldung gegeben werden, die später noch im Einzelnen beschrieben wird. Grundsätzlich soll das Bedienteil für alle elektrischen Installationssysteme geeignet sein, die beispielsweise KNX-, Funk-, IP-Busankoppler verwenden.

Weitere Schnittstellen, wie USB, MicroUSB oder UART sind zum Koppeln mit einem Personal Computer zum Aktualisieren von Software vorgesehen.

Das Bedienteil ist in der Lage, Licht in einen Lichtleiter in seinem Rahmen anzustrahlen. Hierzu ist eine Ambientbeleuchtung vorgesehen, die allerdings nur bei Netz- oder Busversorgung aktivierbar sein sollte und nicht als Rückkopplung bei Betätigung des Bedienteils dient.

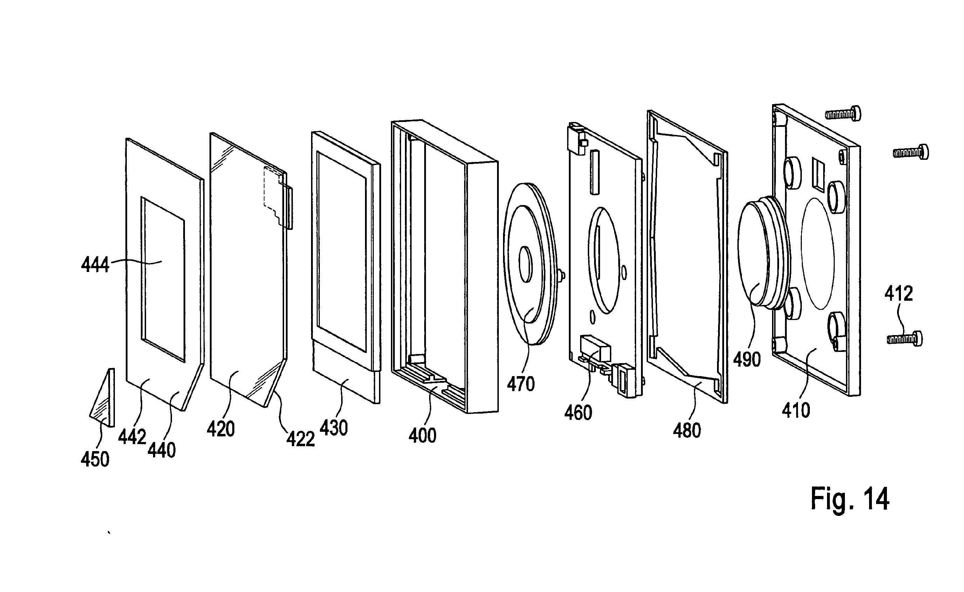

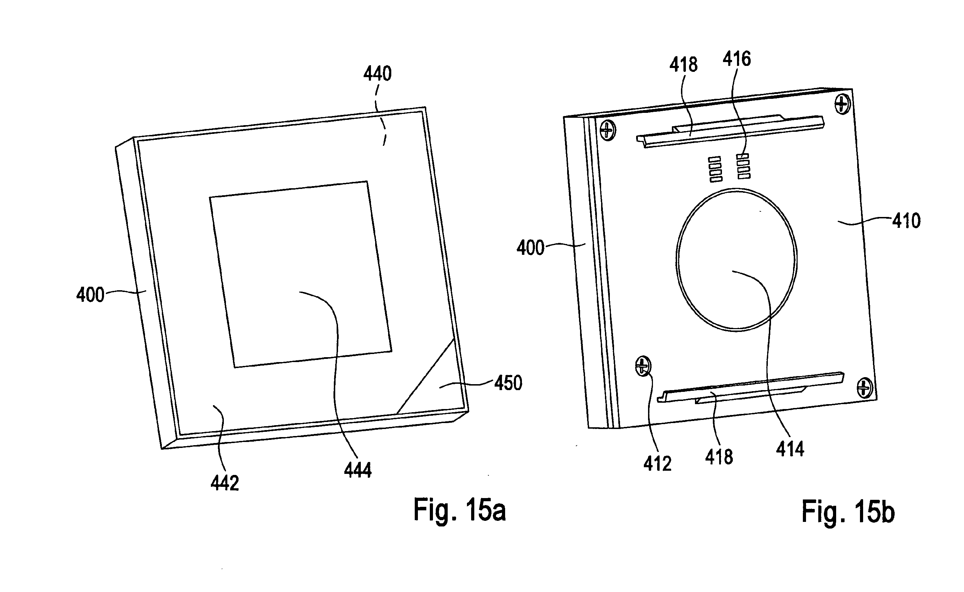

Figur 14 zeigt eine Explosionsdarstellung von Komponenten eines Bedienteils gemäß einer ersten Ausführungsform der vorliegenden Erfindung. Sämtliche Komponenten werden von einem rahmenartigen Gehäuseoberteil 400 und einem plattenartigen Gehäuseunterteil 410 gehalten, die aneinander verschraubt sind, beispielsweise mit vier Schrauben 412. Hinter einem Touch-Sensor 420 ist ein Display 430 angeordnet. Der Touch-Sensor 420 ist mit einer Folie 440, die eine rahmenartige Bedruckung 442 trägt, geschützt. Durch Aussparen eines Eckbereich 422 des Touch-Sensors 420 bzw. der Folie 440 ist eine Einsetzmöglichkeit für eine Linse 450 geschaffen, die aus für Infrarot durchlässigem Material dient und einen Bewegungssensor abdeckt. Die freiliegende Fläche des Touch-Sensors 420, die von der rahmenartigen Bedruckung 442 umgeben ist, bildet einerseits das Bedienfeld, andererseits die sichtbare Fläche des Display 430. Hinter das Display 430 ist eine Leiterplatte 460 in das Gehäuseoberteil 400 eingesetzt, welche die elektronischen Komponenten trägt, die für den Betrieb des Bedienteils erforderlich sind. Insbesondere ist eine Piezoscheibe 470 auf der Leiterplatte 460 gehalten, die für die haptische Rückkopplung sorgt. Andere haptische Rückkopplungssysteme sind möglich. Ein Lichtleiter 480, der beispielsweise mit acht LEDs bestückt ist, sorgt für eine Hintergrund- oder Ambientebeleuchtung des Bedienteils. Die Energieversorgung geschieht über eine Batterie 490, die in einem Batteriefach (vergleiche Figur 15b) angeordnet ist und von der Leiterplatte 460 fixiert wird.

Das zusammengebaute Bedienteil gemäß dieser Ausführungsform der Erfindung ist von der Vorderseite her sichtbar in Figur 15a dargestellt, von der Rückseite her sichtbar in Figur 15b. Der außen umlaufende Rahmen 442 des Touch-Sensors 420 lässt ein Bedienfeld 444 der Folie 440 frei, das gleichzeitig der sichtbaren Fläche des Displays entspricht. Die Abmessungen von Gehäuseoberteil 400 und innen liegenden Komponenten sind so gewählt, dass die Folie 440 und die Linse 450 für den Bewegungssensor fluchtend mit der vorderen Kante des Gehäuseoberteils 400 abschließen. In der Figur 15b ist zu erkennen, wie das plattenartige Gehäuseunterteil 410 das Gehäuseoberteil 400 verschließt und dieses mittels vier Schrauben 412 fixiert, die auch in Lichtleiter 480 und die Leiterplatte 460 an Ort und Stelle halten. Etwa mittig in dem Gehäuseunterteil 410 ist ein Batteriefach angeordnet, das mit einem Deckel 414 verschlossen ist, der durch eine Drehbewegung in eine erste Richtung geöffnet und durch eine Drehbewegung in einer zweiten Richtung verschlossen werden kann. Soll das Bedienteil in Zusammenhang mit einem Leistungsteil ohne Funkverbindung verwendet werden, so geschieht die Kontaktierung über acht Kontakte 416, die auf der freiliegenden Seite des Gehäuseunterteils 410 münden. Jeweils im oberen Bereich und im unteren Bereich des Gehäuseunterteils 410 angeordnete Rastschienen 418 dienen zur mechanischen Ankopplung an einen noch zu beschreibenden Adapter bzw. zur Zentrierung in einer ebenfalls noch zu zeigenden Wandplatte.

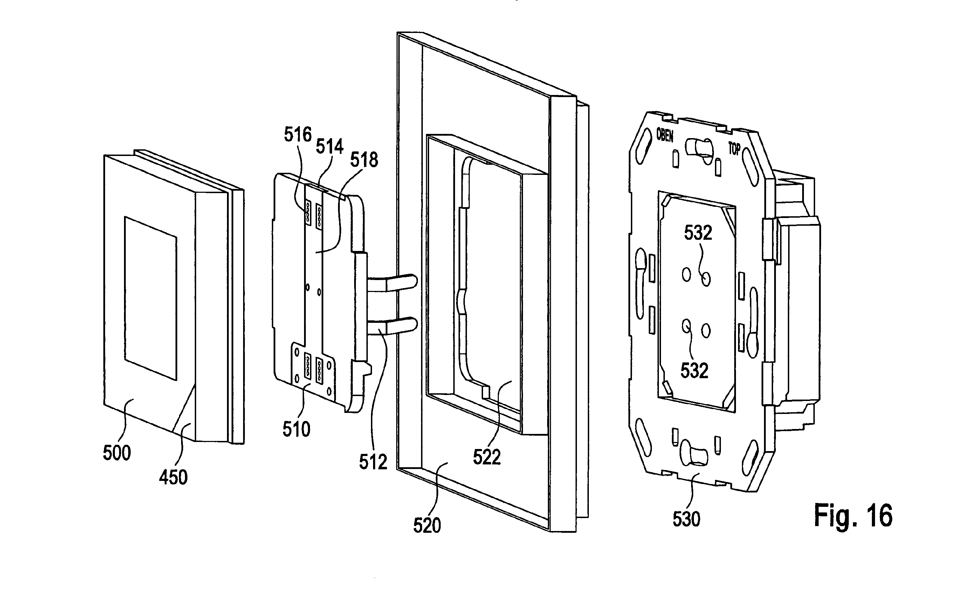

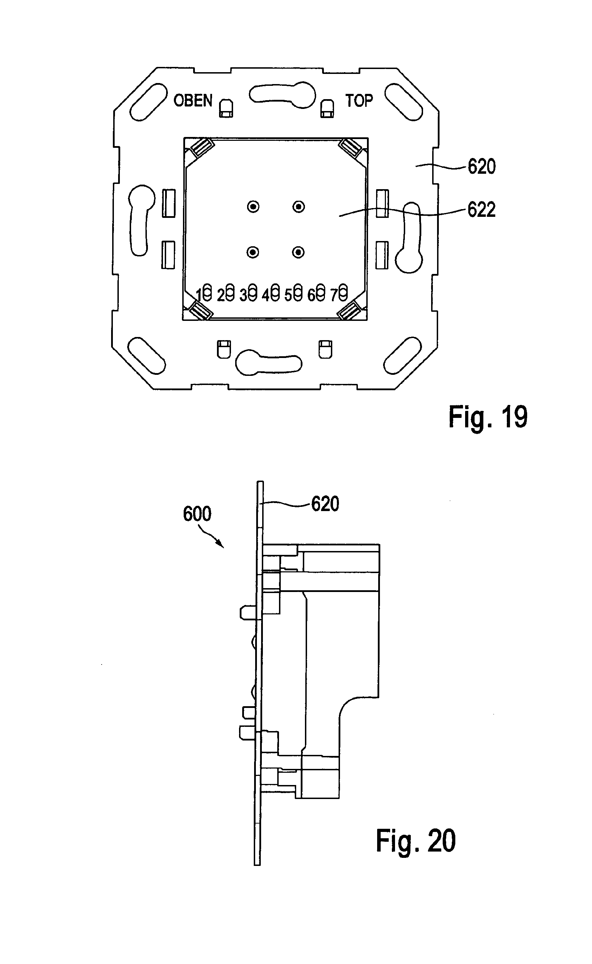

Figur 16 zeigt eine Explosionsdarstellung, die das Zusammenwirken des Bedienteils gemäß einer Ausführungsform der vorliegenden Erfindung mit einem Leistungsteil veranschaulicht. Eine Ausführungsform eines Leistungsteils 530 wird im Zusammenhang mit den Figuren 19 bis 23 näher beschrieben. Das Leistungsteil 530 ist als Unterputzdose ausgebildet, die in üblicher Weise in eine Wandöffnung eingesetzt und verschaltet ist. Sie ist mit einem Rahmen 520 verblendet, der ein quadratisches Rahmenfenster 522 aufweist. Der Kontakt zwischen Bedienteil 500 und Leistungssteil 530 wird durch einen Adapter 510 vermittelt, welcher in das Rahmenfenster 522 einzusetzen ist und mit Kontakten 512 in entsprechende Kontaktausnehmungen 532 des Leistungsteils 530 eingreift. Gleichzeitig sorgt er für einen Höhenausgleich zwischen Bedienteil 500 und Leistungsteil 530. Die Oberkante 514 des Adapters 510 ist in Bezug auf das Rahmenfenster 522 so dimensioniert, dass die Rastschiene (418 in Figur 15b), die sich auf der Rückseite des Bedienteils 500 befindet, in eine so gebildete Aussparung greift, wobei auch gleichzeitig dafür gesorgt ist, dass die Kontakte des Bedienteils (416 in Figur 15b) auf entsprechende Kontakte 512 des Adapters 510 zu liegen kommen. Die Kontaktierung des Adapters 510 ist auf einer Platine 518 vorgenommen.

Es ist auch denkbar, dass das Bedienteil 500 in dem Rahmen 520 bzw. dem Rahmenfenster 522 einfach nur aufbewahrt wird, d.h. ohne das Zusammenwirken mit einem Leistungsteil 530. Für diesen Fall kann der Adapter 510 durch eine einfache Wandplatte ohne irgendwelche Kontaktierung ersetzt werden, die lediglich die Eingriffsmöglichkeit für die Rastschiene (418 in Figur 15b) vorsehen muss.

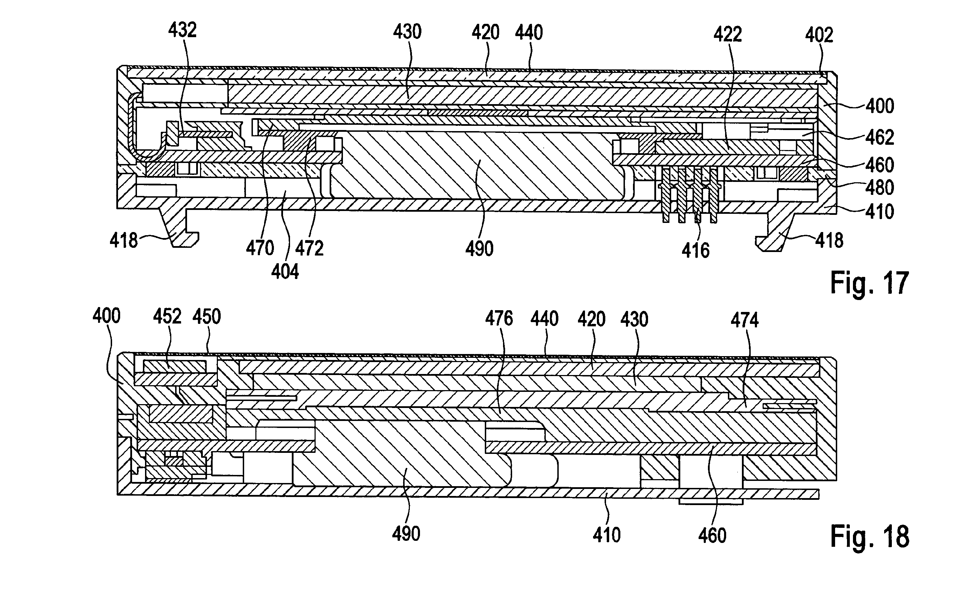

Figur 17 zeigt ein erstes Beispiel für einen Aufbau eines Bedienteils gemäß der vorliegenden Erfindung in einer Schnittansicht. Der Touch-Sensor 420 liegt in einer umlaufenden Stufe 402 des Gehäuseoberteils 400 derart, dass er bündig mit der Oberkante des Gehäuseoberteils 400 abschließt. Er ist, wie schon in Zusammenhang mit den Figuren 14 und 15a beschrieben, mit einer Folie 440 abgedeckt. Das Gehäuseoberteil 400 ist von dem Gehäuseunterteil 410 verschlossen, zwischen Gehäuseoberteil 400 und Gehäuseunterteil 410 ist ein Lichtleiter 480 angeordnet, der für die Ambiente-Beleuchtung sorgt. Unter dem Touch-Sensor 420 ist ein Display 430 angeordnet, das mit Hilfe der Leiterplatte 460 kontaktiert wird, und zwar einerseits über die Kontaktierung 432 für das Display 430, andererseits über die Kontaktierung 424 des Touch-Sensors 420. Von der Leiterplatte 460 gehen die Kontakte 416 zum Anschluss an den Adapter (510 in Figur 16) ab. Die elektronischen Komponenten werden von der Batterie 490 versorgt. Im Gehäuseunterteil sind weiterhin Taschen 404 für Magnete vorgesehen, mit denen das erfindungsgemäße Bedienteil an einer entsprechenden magnetischen Unterlage befestigt werden kann. Unterhalb des Displays 430 ist eine Piezo-Scheibe 470 vorgesehen, die der haptischen Rückkopplung an den Benutzer dient.

Figur 18 zeigt ein zweites Beispiel für den Aufbau eines Bedienteils gemäß der vorliegenden Erfindung, wobei die Schnittansicht jetzt in den Bereich der Linse (450 in Figur 14) gelegt ist. Der wesentliche Unterschied gegenüber dem Ausführungsbeispiel der Figur 17 besteht darin, dass anstelle einer Piezo-Schreibe 470 ein Polymer-Aktor 474 verwendet wird, der als unterste Schicht in dem Schichtaufbau aus Folie 440, Touch-Sensor 420, Display 430 und Polymer-Aktor 474 vorgesehen ist. Um den Polymer-Aktor 474 zu stützen, ist das Gehäuseoberteil 400 in eine Gehäuseplatte 476 eingezogen.

Figur 19 zeigt eine Draufsicht auf eine Tragplatte für ein Leistungsteil zur Verwendung bei der vorliegenden Erfindung. Wesentlich ist, dass von der üblichen runden Tragplattenöffnung abgewichen wird und nun eine quadratische Tragplattenöffnung 622 mit Abmessungen von etwa 40 mm x 40 mm zum Einsatz kommt, der die Tragplattenöffnung 622 umgebende Rahmen 620 ist in üblicherweise mit Montage- und Baulöchern versehen. In der Tragplattenöffnung 622 ist die Kontaktierung des Leistungsteils schematisch zu erkennen.

Bei Verwendung dieses Konzepts ist ein Leistungsteil 600 möglich, wie es in Figur 20 gezeigt ist, das sich dadurch auszeichnet, dass die Bautiefe auf etwa 22 mm reduziert werden kann.

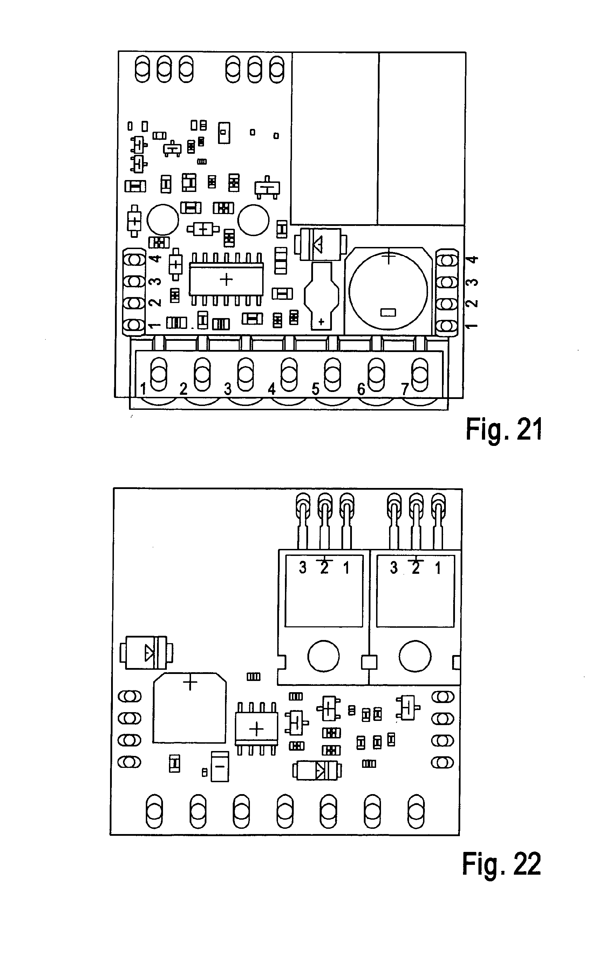

Dabei sind zwei Arten des Elektronikaufbaus möglich, wobei Komponenten verwendet werden, die in den Figuren 21 bis 23 gezeigt sind.

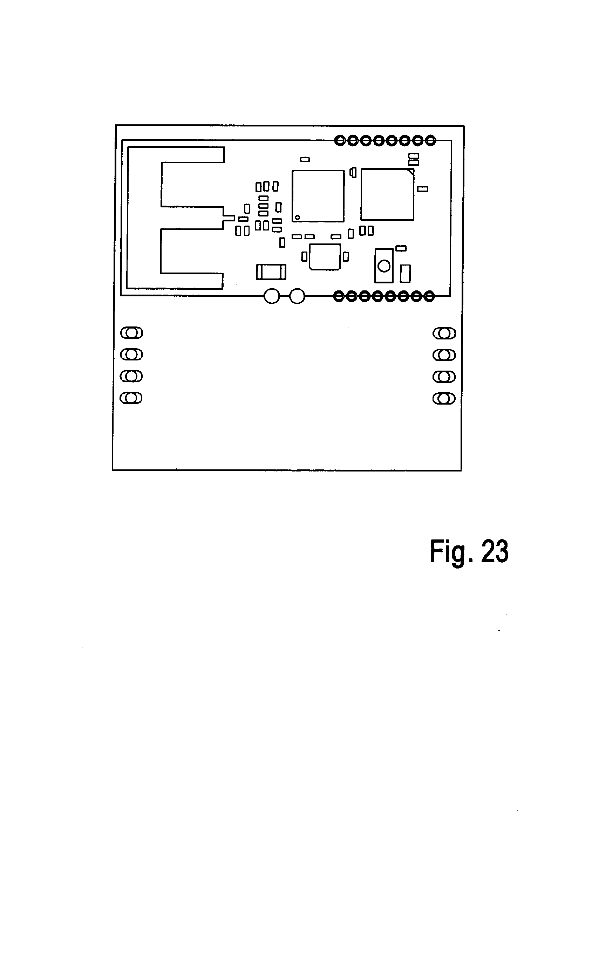

Die erste Variante verwendet ein kombiniertes Dimmer-/Relaisbord, dessen Vorderseite in Figur 21 gezeigt ist und dessen Rückseite in Figur 22 gezeigt ist. Die Abmaße des Elektronikaufbaus betragen etwa 38 mm x 38 mm x 15,4 mm. Das Dimmer-/Relaisbord der Figuren 21 und 22 kann durch ein Funk-Elektronikmodul ergänzt werden, das in Figur 23 gezeigt ist. Die Bauhöhe erhöht sich dadurch auf 19,2 mm.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Bedienteil in einem elektrischen Installationssystem, an das mehrere zu steuernde Lasten angeschlossen sind, mit
- einer Eingabeeinheit (120);
- einer Datenverarbeitungs- und Steuereinrichtung, welche Befehlssignale von der Eingabeeinheit (120) erhält und verarbeitet, um Steuersignale zu erzeugen, welche eine durch die Datensignale festgelegte Last steuern,
- einer Speichereinrichtung;
- einer Schnittstelle zum Kommunizieren mit einem Leistungsteil (530) in dem elektrischen Installationssystem, wobei die Schnittstelle eine Kontaktanordnung oder eine Funkschnittstelle ist, welche die Steuersignale aussendet,
**dadurch gekennzeichnet, dass** in der Speichereinrichtung eine Datenbank angelegt ist, in der die zu steuernden Lasten in funktionale Gruppen eingeordnet sind, wobei jeder funktionalen Gruppe eine allen Mitgliedern der Gruppe gemeinsame Hauptfunktion zugeordnet ist, die Datenverarbeitungs- und Steuereinrichtung auf die Speichereinrichtung zugreift, um entsprechend dem Datensignal die zugehörige funktionale Gruppe zu ermitteln, und das Steuersignal mit der Information über die ermittelte funktionale Gruppe an die Schnittstelle zur Übertragung an das Leistungsteil ausgibt.

2. Bedienteil nach Anspruch 1, **dadurch gekennzeichnet, dass** als Eingabeeinheit ein Touch-Sensor (120, 420) mit einer horizontalen und einer vertikalen Abmessung vorgesehen ist und dass ein Display (130) hinter dem Touch-Sensor (120, 420) angeordnet ist, welches zumindest die zu steuernde Last und wenigstens einen Steuerparameter der zu steuernden Last anzeigt.

3. Bedienteil nach Anspruch 1, **dadurch gekennzeichnet, dass** der Touch-Sensor (120, 420) auf einer einseitig aufgehängten mechanischen Wippe montiert ist.

4. Bedienteil nach Anspruch 1, **dadurch gekennzeichnet, dass** die Hauptfunktion durch Drücken eines vertikal unteren Bereiches des Touch-Sensors oder Tippen auf einen vertikal unteren Bereich des Touch-Sensors (120, 420) auszulösen ist.

5. Bedienteil nach Anspruch 1, **dadurch gekennzeichnet, dass** die Datenverarbeitungs- und Steuereinrichtung bewirkt, dass die Navigation zwischen Mitgliedern einer funktionalen Gruppe durch Wischen des Touch-Sensors (120, 420) in einer ersten Richtung erfolgt und dass die Navigation zwischen funktionalen Gruppen durch Wischen des Touch-Sensors (120, 420) in einer zweiten Richtung, die von der ersten Richtung unterschiedlich ist, erfolgt.

6. Bedienteil nach Anspruch 1, **dadurch gekennzeichnet, dass** jeder funktionalen Gruppe eine Nebenfunktion zugeordnet ist, wobei die unterschiedlichen Nebenfunktionen durch dieselbe haptische Bewegung auf dem Touch-Sensor (120, 420) auszulösen sind.

7. Bedienteil nach Anspruch 1, **dadurch gekennzeichnet, dass** es einen Näherungssensor aufweist.

8. Bedienteil nach Anspruch 1, **dadurch gekennzeichnet, dass** es einen Lagesensor aufweist.

9. Bedienteil nach Anspruch 1, **dadurch gekennzeichnet, dass** unter dem Touch-Sensor (120 420) oder unter dem Display (130) ein Vibrationsmotor, ein Piezoaktor (470) oder ein Polymeraktor (474) oder ein anderes taktiles Rückkopplungssystem für die haptische Rückkopplung zum Bediener angeordnet ist.

10. Elektrisches Installationssystem, umfassend mindestens ein Leistungsteil und mindestens ein Bedienteil nach einem der Ansprüche 1 bis 9, wobei jedes Leistungsteil wenigstens
- eine erste Treiber- und Endstufe mit Ausgang für den Anschluss einer ersten Last,
- eine zweite Treiber- und Endstufe mit Ausgang für den Anschluss einer zweiten Last, und
- eine Schaltstufe
aufweist, wobei das Leistungsteil weiter eine erste Steuereinrichtung, um nach Wahl eine der Treiber- und Endstufen und/oder die Schaltstufe zu aktivieren, und eine erste Funkeinrichtung zur drahtlosen Kommunikation mit zur Zeit einem der Bedienteile aufweist.
